Europäisches Patentamt

European Patent Office

Office européen des brevets

(11) Publication number: 0 409 656 A2

# EUROPEAN PATENT APPLICATION

(21) Application number: 90307988.7

(22) Date of filing: 20.07.90

(51) Int. Cl.5: **B29C 39/24**, B29C 39/44, B29C 31/04

(30) Priority: 21.07.89 GB 8916751

(43) Date of publication of application:
23.01.91 Bulletin 91/04

(84) Designated Contracting States:
AT BE CH DE DK ES FR GB GR IT LI LU NL SE

(71) Applicant: **BABCOCK TRANSFORMERS LIMITED**
**Oxford Street, Bilston**
**West Midlands, WV14 7DL(GB)**

(72) Inventor: **Michel, Andrew**
**20 Holte Drive**
**Four Oaks, Sutton Coldfield B75 6PR(GB)**

(74) Representative: Lewis, David Overington
C/o Babcok International Ltd., 217 Tabard
Street
London SE1 4UR(GB)

(54) Producing moulded castings in polymer materials.

(57) Apparatus for producing moulded castings in polymer materials includes reservoirs 6, 8, 90 for constituent materials (such as bis-phenol A based expoxide resin, acid anhydride or polyisolcyanate hardener, pigments, dilutents and catalysts), metering devices 11, 13, 92 arranged to control outflow from the reservoirs interconnected 70 to proportion the outflows and mixing means 4 arranged to mix together the outflows. The mixed material is supplied to an accumulator 16 discharging to a cavity mould 2 positioned within an autoclave 4. The autoclave interior and the interior of the cavity mould 2 are respectively connectable alternatively to a source of air at superatmospheric pressure 26, or to a sub-atmospheric pressure exhaust 56, or a further sub-atmospheric pressure exhaust 60, or to a source 40 of purging gas (such as sulphur hexafluoride). In operation, the cavity mould 2 with an electrical component in place is loaded into the autoclave 4, exhausted and purged in two stages and then filled with the polymer materials from the accumulator 16. Polymerisation is then effected by pressurizing and heating the autoclave 4 to encapsulate the electrical component. The gas pressures within the cavity mould 2 and the air pressures the autoclave 4 are kept in approximate balance during exhausting and purging to contain the pressure differential across the cavity mould wall within acceptable limits.

## PRODUCING MOULDED CASTINGS IN POLYMER MATERIALS.

This invention relates to apparatus for, and a method of, producing moulded castings in polymer materials and, more particularly, for producing moulded castings in polymer materials encapsulating electrical products.

According to one aspect of the invention, there is provided apparatus for producing moulded castings in polymer materials including reservoirs for constituent materials, metering devices arranged to control outflow from the reservoirs interconnected to proportion the outflows, mixing means arranged to mix together the outflows, a supply line connecting the mixing means to a cavity mould positioned within an autoclave, a first pneumatic line connected to the autoclave interior through a first regulating and stop valve to a first selector valve, a second pneumatic line connected to the cavity mould interior through a second regulating and stop valve to a second selector valve, the first selector valve being connectable alternatively to a source of air at superatmospheric pressure or to a branch connecting with a third selector valve and a sub-atmospheric pressure exhaust, the second selector valve being connectable alternatively to a second sub-atmospheric pressure exhaust or to the third selector valve and the third selector valve being operable alternatively to connect the second selector valve to the branch and the first sub-atmospheric pressure exhaust or to a source of purging gas.

Preferably, the source of purging gas is connected, through a regulating and stop valve, to upper internal regions of the reservoirs.

Desirably, respective gas pressure regulating means are positioned in each pneumatic line.

Suitably, means are provided to subject the mixing means and the supply time connecting the mixing means to the cavity mould to a flushing flow of solvent for the polymer materials.

In another aspect of the invention, a method of production of a moulded casting encapsulating an electrical component in polymer material includes positioning a pre-heated and dried out electrical component in a cavity mould in an autoclave, exhausting air from the cavity mould and a supply line leading from a mixer for the polymer material to the cavity mould, supplying purging gas to the cavity mould, supply line and mixer, supplying component constituents of the polymer material in pre-determined proportions to the mixer, mixing the component constituents in the mixer and discharging the mixture to fill the cavity mould and heating the autoclave to effect polymerisation of the material in the cavity mould and form the moulded casting.

Preferably, exhaust pressures obtaining within the cavity mould upon exhausting air therefrom, are balanced by corresponding reductions in air pressure within the autoclave and the gas pressure of the purging gas within the cavity mould is balanced by a corresponding air pressure within the autoclave.

Desirably, exhausting air from the cavity mould and the autoclave is effected in two stages.

Suitably, following supply of the polymer material to the cavity mould, the supply line and the mixer are subjected to a flushing flow of solvent to remove polymerising material therefrom.

The invention will now be described, by way of example, with reference to the accompanying diagrammatic line diagram of a two component polymer resin system indicating a cavity mould 2 positioned in an autoclave 4. Closed reservoirs 6,8 of resin, filler and colourant and of hardener are arranged to discharge metered quantities through lines 10, 12 through metering flow controllers 11 and 13 to a mixer 14 discharging through a line 15 to an accumulator 16 for the mixed materials and thence through a line 17 to the base of the cavity mould 2. A first pneumatic line 18 connects the autoclave 4 through a first regulating and stop valve 20, a first two-way, selector valve 22 and an air pressure regulator 24 to a source 26 of air at super-atmospheric pressure. A second pneumatic line 28 connects an upper region of the cavity mould 2 through a second regulating and stop valve 30, a second, two-way, selector valve 32, a third, two-way selector valve 34, a third regulating and stop valve 36 and isolating valve 38 (if required) to a source 40 of sulphur hexafluoride purging gas. A third pneumatic line 42 connects the source 40 of purging gas through a fourth regulating and stop valve 46 to the accumulator 16 whilst fifth and sixth pneumatic lines 43, 45 connects the source 40 through regulating and stop valves 48, 49 to upper regions 50, 52 of the reservoirs 6, 8. The first and third selector valves 22, 34 are connected additionally through a branched pneumatic line 54 to a first sub-atmospheric pressure exhaust 56, whilst the second selector valve 32 is connected additionally through a pneumatic line 58 to a second sub-atmospheric pressure exhaust 60, exhausting to a lower pressure than the first exhaust 56.

Pressure relief valves 62, 64, 66 are provided on the reservoirs 6, 8 and the accumulator 16 to permit egress of air when the system is supplied with the sulphur hexafluoride purging gas.

The autoclave is provided with a heater 68 and pressure release valves 84, 86.

In operation, the reservoirs 6 and 8 are filled respectively with the resin, filler and colourant and with the hardner, the cavity mould 2 and electrical component positioned in the autoclave 4, the electrical component previously having been pre-heated, dried out and vacuum treated either in the autoclave 4 or in a separate installation (not shown).

The autoclave is then closed and the first and third selector valves 22, 34 set to connect respectively the lines 18, 28 to the first exhaust 56 through line 54, the second selector valve 32 being set to isolate the second exhaust 60 from the line 28. The first and second regulating and stop valves 20, 30 are then opened to apply a first vacuum to the autoclave 4 and the cavity mould 2,the supply line 17 and the accumulator 16. The vacuum applied at this stage is determined in accordance with the materials used in, and the complexity of, the electrical component. Having exhausted a substantial proportion of the air from the system, the first and second regulating and stop valves 20, 30 are then closed, the second selector valve 32 set to connect the second line 28 to the second exhaust 60 and the second regulating and stop valve 30 reopened to apply the second vacuum to the cavity mould 2 and the associated lines.

Having exhausted a high proportion of air from the cavity mould and the associated lines, the second regulating and stop valve 30 is closed, the first selector valve 22 is set to connect the first line 18 to the source 26 of air at super-atmospheric pressure and the second selector valve 32 and the third selector valve 34 are set to connect the second line 28 to the source 40 of sulphur hexafluoride purging gas. The third regulating and stop valve 36 is then opened followed by the second regulating and stop valve 30 to equalise approximately the purging gas pressure within the cavity mould 2 and the reduced air pressure in the autoclave, whereupon the first regulating and stop valve is opened to allow the air pressure in the autoclave to increase (supplied from the source 26) in approximate equilibrium with the increase in pressure of the sulphur hexalfluoride purging gas from the source 40. Additionally, the fourth regulating and stop valve 46 is opened to supply the sulphur fluoride purging gas to the line 42 and the accumulator 16. Air is bled from the system through the pressure relief valve 66 if necessary. The foregoing cycle of evacuation and purging of the cavity mould 2 and associated lines is repeated as appropriate with timing, temperature and pressure varied according to the complexity and materials of construction of the electrical component. Having purged the cavity mould 2 and the associated lines of air, using the relief valve 66 to bleed air from the system if necessary, the first, second and third regulating and stop valves 20, 30 and 36 are closed and the fifth and sixth regulating and stop valves 48, 49 opened to connect the source of sulphur hexafluoride purging gas to the upper regions 50, 52 of the reservoirs 6, 8 - bleeding air through the relief valves 62, 64, if necessary.

The mixer 14 is then energised to draw and mix metered quantities of the resin, filler and colourant from the first reservoir 6 through the metering flow controller 11 and hardener from the second reservoir 8 through the metering flow controller 13 and discharge the mixture into the cavity mould 2 through the accumulator 16. The metering flow controllers 11, 13 are connected together through proportioning control circuitry 70 to achieve the requisite proportioning. A vacuum may be applied through the line 28 to assist the flow of the mixture into the cavity mould. As a variation, a metered quantity sufficient just to fill the cavity mould, of the polymer material is supplied from the mixer 14 to the accumulator 16 and discharged to the cavity mould by a flow of the purging gas through the fourth regulating and stop valve 46 and the line 42 into the accumulator 16 above the mixture and thence through line 17 to the cavity mould 2.

Having filled the cavity mould 2, the fourth regulating and stop valve 46 is closed (together with the second regulating and stop valve 30 if it was opened to apply vacuum) and the heater 68 energised to accelerate the polymerisation process. Once the moulding has set the heater 68 is de-energised, the autoclave 4 opened - having brought the interior to atmospheric pressure - and the moulding removed, whereupon the sequence may be repeated.

The reservoirs 6,8 and lines 10,12 leading to the mixer 14 are heated so the respective contents remain in a flowable condition throughout the operation. Similarly, the mixer 14 and line 17 leading to the mould are also heated, so that polymerisation of the mixture only proceeds at a slow rate in the mixer 14 and line 17. Connections (not shown) are provided to the mixer 14 and line 17 for the flow of a solvent flush at the end of each moulding cycle to remove partially polymerised material from the mixer 14, the accumulator 16 and line 17.

Since, during the sequence, the pneumatic pressure differential across the wall of the cavity mould 2 is kept within a limit determined by the pressure differential between the first and second pneumatic lines 18, 28 it is not necessary to dimension the cavity mould wall to withstand the full pressure difference between the second exhaust pressure and atmospheric pressure.

Since sulphur hexafluoride is a very inert gas having good di-electric properties, its use as a purging gas assists in ensuring that the electrical properties of the encapsulated component are not deleteriously affected by residual inclusions of air, moisture or gas itself.

It will be appreciated that gases other than sulphur hexafluoride may be used as purging gas provided that the gas utilised is not deleterious to the resin compound, the materials of the electrical component or the functioning of the electrical component in the event of any of the gas becoming encapsulated with the electrical component.

A typical resin and hardener formulation would comprise a bis-phenol A based epoxide resin, plus an acid anhydride or polyisocyanate hardener (eg. phthallic anhydride or MDI) with mineral fillers of various graded sizes, iron oxide (or other inert mineral based pigments) and reactive diluents (flexibilisers), and appropriate catalysts. Single component resin systems with latent catalysts may also be processed by this method (as can multiple component systems) by modification of the metered delivery to the accumulator and mixer and incorporation of the appropriate storage tanks.

However, it will be understood that any polymeric material having the requisite electrical and mechanical properties and that can be made to flow by the application of pressure at a temperature lower than that required to effect any desired reaction in the cavity mould may be utilised. Thus, in particular, thermosetting resin systems and rubbers (excepting those which undergo condensation polymerisation reactions) may be utilised.

It will also be appreciated that one or more additional reservoirs 90, one of which is shown in chain dotted outline, and having an associated metering controller 92 and having an upper region 94 connected to the source 40 of sulphur hexafluoride, may be provided as a source of additional or alternative resin components.

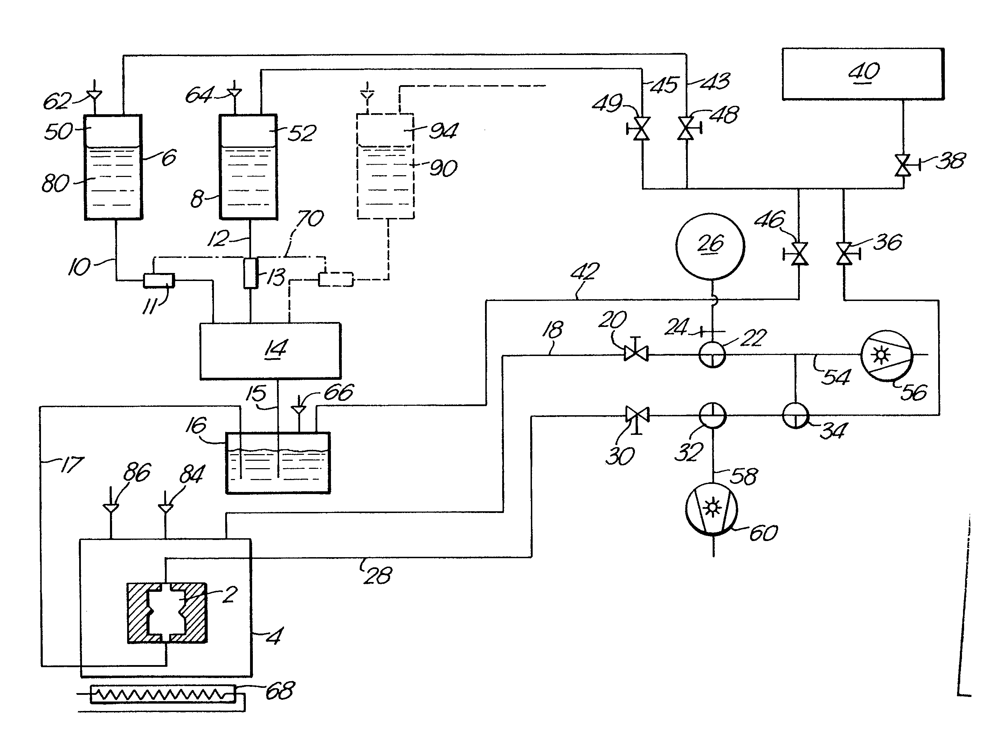

## Claims

1. Apparatus for producing moulded castings in polymer materials characterised in that the apparatus includes reservoirs (6, 8, 90) for constituent materials, metering devices (11, 13, 92) arranged to control outflow from the reservoirs interconnected (70) to proportion the outflows, mixing means (4) arranged to mix together the outflows, a supply line (15, 17) connecting the mixing means (14) to a cavity mould (2) positioned within an autoclave (4), a first pneumatic line (18) connected to the autoclave interior through a first regulating and stop valve (20) to a first selector valve (22), a second pneumatic line (28) connected to the interior of the cavity mould (2) through a second regulating and stop valve (30) to a second selector valve (32), the first selector valve (22) being connectable alternatively to a source of air at superatmospheric pressure (26) or to a branch (54) connecting with a third selector valve (34) and a sub-atmospheric pressure exhaust (56), the second selector valve (32) being connectable alternatively to a second sub-atmospheric pressure exhaust (60) or to the third selector valve (34) and the third selector valve (34) being operable alternatively to connect the second selector valve (32) to the branch (54) and the first sub-atmospheric pressure exhaust (56) or to a source (40) of purging gas.

2. Apparatus for producing moulded castings in polymer materials as claimed in Claim 1 characterised in that the source (40) of purging gas is connected, through regulating and stop valves (48, 49), to upper internal regions (50, 52, 94) of the reservoirs (6, 8, 90).

3. Apparatus for producing moulded castings in polymer materials as claimed in Claim 1 or Claim 2, characterised in that respective gas pressure regulating means (20, 30, 36, 46, 48, 49) are positioned in each pneumatic line.

4. Apparatus for producing moulded castings in polymer materials as claimed in any preceding Claim, characterised in that the mixing means (14) discharges through an accumulator vessel (16) to the cavity mould (2), the accumulator vessel (16) being connected to the source (40) of purging gas through a fourth regulating and stop valve (46).

5. Apparatus for producing moulded castings in polymer materials as claimed in any preceding Claim, characterised in that means are provided to subject the apparatus to a flushing flow of solvent for the polymer materials.

6. A method of production of a moulded casting encapsulating an electrical component an electrical component in polymer material characterised by positioning a pre-heated and dried out electrical component in a cavity mould (2) in an autoclave (4), exhausting air from the cavity mould (2) and a supply line (15, 17) leading from a mixer (14) for the polymer material to the cavity mould (2), supplying purging gas to the cavity mould (2), supplying purging gas to the cavity mould (2), supply line (15, 17) and mixer (14), supplying component constituents of the polymer material in pre-determined proportions to the mixer (14), mixing the component constituents in the mixer (14) and discharging the mixture to fill the cavity mould (2) and heating the autoclave (4) to effect polymerisation of the material in the cavity mould (2) and form the moulded casting.

7. A method of production of a moulded casting encapsulating an electrical component in polymer material as claimed in Claim 6, characterised in that exhaust pressures obtaining within the cavity mould (2) upon exhausting air therefrom, are balanced by corresponding reductions in air pressure within the autoclave (4) and the gas pressure of the purging gas within the cavity mould (2) is balanced by a corresponding air pressure within the autoclave.

8. A method of production of a moulded casting encapsulating an electrical component in polymer material as claimed in Claim 6 or Claim 7, characterised in that exhausting air from the cavity mould and the autoclave is effected in two stages.

9. A method of production of a moulded casting encapsulating an electrical component in polymer material as claimed in any one of Claims 6, 7 and 8, characterised in that following supply of the polymer material to the cavity mould, the supply line and the mixer are subjected to a flushing flow of solvent to remove polymerising material therefrom.

10. A method of production of a moulded casting encapsulating an electrical component in polymer material as claimed in any one of Claims 6 to 9, characterised in that the polymer material is formed by mixing a bis-phenol A based expoxide resin with an acid anhydride or polyisocyanate hardener.